# EUROPEAN PATENT SPECIFICATION

(11) **EP 2 249 950 B1**
(45) Date of publication and mention of the grant of the patent: **15.10.2014**
(21) Application number: 09716232.5
(22) Date of filing: 03.03.2009
(51) Int. Cl.: B01D 69/14, B01D 71/12, B01D 71/08, H01M 8/04, H01M 8/10, B01D 61/36

(54) **A POLYMERIC HYBRID MEMBRANE**
POLYMERE HYBRID MEMBRAN
MEMBRANE POLYMÉRIQUE HYBRIDE

(30) Priority: 05.03.2008 IN DE05262008
(43) Date of publication of application: 17.11.2010
(73) Proprietor: Council of Scientific & Industrial Research, New Delhi 110 001 (IN)
(72) Inventor: SHUKLA, Ashok, Kumar, Tamil Nadu 600 113 (IN); PITCHUMANI, Sethuraman, Tamil Nadu 600 113 (IN); SRIDHAR, Parthasarathi, Tamil Nadu 600 113 (IN); BHAT, Santoshkumar, Dattatray, Tamil Nadu 600 113 (IN); MANOKARAN, Ayyappan, Tamil Nadu 600 113 (IN); SAHU, Akhila, Kumar, Tamil Nadu 600 113 (IN)
(74) Representative: Peters, Hajo
(86) International application number: PCT/IN2009/000142
(87) International publication number: WO 2009/110001

(56) References cited:
- US-A1- 2007 082 245

## Description

### FIELD OF INVENTION

The present invention relates to a novel polymeric hybrid membrane. More particularly, the invention provides membranes comprising chitosan [CS], hydroxy ethyl cellulose [HEC] and montmorillonite [MMT] cross linked in acidic medium. The new types of polymeric membranes of this invention, besides being efficient for air humidification, are also cost-effective.

### BACKGROUND OF INVENTION AND DESCRIPTION OF PRIOR ART

Membrane-based air humidification is central to prolonged operation of polymer electrolyte fuel cells (PEFCs). To this effect, humidified air is fed to the cathode chambers of the PEFC stack. The humidification of the air is efficiently achieved through a membrane humidifier, generally made of the Nafion^{®} membrane. In such a humidifier, liquid water and dry air are fed to either side of the membrane creating a water activity gradient across the membrane, thereby forcing the water to diffuse across the membrane from the water side to the air side that subsequently evaporates at the membrane/air interface humidifying the air. The use of humidified air is mandatory as compressed air is generally too dry to be used in polymer electrolyte fuel cells while the atmospheric air exhibits considerable variation in its humidity and composition often failing to meet the requirement.

Different types of membranes, namely cellophane, Nafion^{®}, and other ultrafiltration and reverse osmosis membranes, have been employed for humidifying PEFC stacks to optimize the volume and energy consumption. There are two ways of air humidification, namely external and internal humidification. Most of the external humidifiers are bubble humidifiers injecting water vapor into the dry air stream to maintain humidified-air feed to the PEFC stack. But such a system is complex and adds to parasitic energy consumption. By contrast, for internal humidification, product water from the PEFC stack itself is used to maintain the humidified-air feed to the stack. The latter is more appropriate to achieve high performance fuel cell operation. For humidification purpose, the membrane should be water permeable and must resist transmission of reactant gases or other components.

The humidifier is central to the fuel cell stack wherein a reactant gas, such as the oxidant air, is humidified by product water vapor in the fuel cell exhaust. The improved mechanical properties of the membrane allows for a simpler humidifier configuration. Thus, any humidifying membrane needs to follow the principle of pervaporation (PV), wherein sorption of water molecules takes place at the interface of the membrane followed by diffusion across the membrane due to concentration gradient (rate-determining step), and finally desorption into vapor phase. These steps are responsible to realize higher water flux during the humidification process. Such a situation also provides the possibility to custom design membranes to match the above characteristics. Accordingly, the choice for identifying new hybrid polymers that offer higher flux and selectivity to water depends on the appropriate selection of polymeric materials capable of producing membranes suitable for humidification process. US patent 6,864,005 describes the membrane exchange humidifier employing a water permeable membrane comprising a microporous polymer, such as hydrophobic high density polyethylene and hydrophilic silica as additive. However, the drawbacks are that in such a combination, water flux for desired humidified air output remains limited due to the presence of a hydrophobic barrier.

US patent 6,416,895 discloses different methods for humidification. More particularly, the invention relates to a fuel cell system and method wherein heat and.water vapor generated by the fuel cell are used for humidifying the reactant-gas stream prior to its introduction to the fuel cell. However, the method described herein is complex and adds to the cost of the membrane and other related components.

US Patent 5,348,691 provides a membrane humidifying device that can operate with normal potable quality water without a demineralizer preventing the transport of microbes, particulates, dissolved salts and liquid water to the air stream. The membranes employed here are hydrophilic ion-exchange membranes selected from perfluorocarbon sulfonic acid and polystyrene sulfonic acid polymers. However, the membrane-humidifying device is complicated with several contiguous layers, each comprising a hydrophilic membrane separated through metallic screens consisting of silver, aluminum, stainless steel and their mixtures thereof.

US Patent 5,996,976 explains a humidifier that uses water permeable polymeric membrane such as perfluorinated polymer in the form of a tube, sheet, and tubulated sheet spaced apart with each membrane having provision for gas passage and water. However, for large airstreams, it is necessary to provide a large membrane area with low flow-pressure loss that turns the system complicated and increases the overall volume besides adding to its cost.

US Patent 6,474,628 relates to a humidifier wherein special devices are employed for air humidification with polyamides, polyvinyl chloride, polysulfone and/or Teflon-based materials. The invention also enables the use of coarse filters ensuring water dispersion over a large surface-area. However, the drawbacks associated therewith are high hydrophobicity of these polymers which hinders the high water permeation in air humidification.

US Patent 6,841,601 discloses cross-linked polymer electrolyte membranes for heat and moisture exchange devices. The membranes were obtained by laminating nonwoven nylon reinforcement to a layer of a sulfonated styrene/olefin polymer. Other reported organic-inorganic hybrid membranes comprise sulfonated styrene/ethylene/propylene taped copolymer with organosilane as inorganic material. However, this invention provides a unitary humidity exchange cell that includes at least one of the above hybrid membranes for transferring heat, ions and moisture.

US Patent 6,413,298 describes water and ion conducting membranes composed of sulfonated arylvinyl polymers with olefin monomer used as water-conducting membranes for humidifying gases in fuel cells and to exchange moisture in heating/ventilation/air conditioning systems. However, the drawbacks associated therewith are complex sulfonation steps and also the low hydrophilicty for water permeation through the membrane.

US Publication US 2007/082245 describes an evaporative cooling system for fuel cell systems using cathode product water. It relates to a thermal sub-system for a fuel cell system that employs a radiator having a selectively permeable wall to allow water in a cooling fluid flowing through the radiator to permeate through the wall and be evaporated to increase the cooling ability of the radiator, where the water separated from the cathode exhaust is used to replenish the evaporated cooling fluid water.

To achieve a precise humidified air output Nafion", polysulfone and polyamide composite membranes are also employed as described in the' article entitled "Characteristics of membrane humidifier for polymer electrolyte membrane fuel cells" by S. K. Park et al., published in Korean Journal of 9I1.emical Engineering 22 (2005) 877 and in another article entitled "Study of the internal humidification of an integrated PEMFC stack" by K.H. Choi et al., published in Journal of power sources 74 (1998) 146. However, the main limitations of these membranes are the high cost of Nafion^{®}, large pore size and gas permeability of polysulfone and polyamide for humidification process. These membranes were originally designed for a specific purpose and later exploited for humidification.

Accordingly, keeping in purview the drawbacks of the hitherto known prior art, the inventors of the present invention realized that there exists a dire need to provide a novel composition for newer polymeric membranes suitable for humidification purposes, which are not only more efficient but are cost-effective.

In this invention, a new polymeric hybrid membrane namely, Chitosan (CS) - hydroxy ethyl cellulose (HEC) - montmorillonite (MMT), is disclosed specifically suiting the humidification process. CS as such is water insoluble but can be made soluble by suitably modifying hydroxy and amino groups present in CS using aqueous acetic acid solution. HEC is water soluble cellulose ether. It is a non-ionic polymer compatible with CS and can also form a homogeneous blend. HEC is added to ameliorate hydrophilicity and MMT is used as filler for high water retention and mechanical stability to form a stable self-supported membrane. In this invention, CS-HEC-MMT polymeric hybrid membrane is explored for humidification purpose. The new type of polymeric hybrid membrane reported in this invention besides being efficient for air humidification is also cost-effective.

### OBJECTS OF THE INVENTION

The main object of the present invention is to provide an alternative cost-effective membrane for use in air humidifier to overcome the aforesaid drawbacks.

Another object of the present invention is to provide a new polymeric membrane comprising natural polymer hybrid with inorganic fillers therein for its suitability and compatibility in humidification process.

Still another objective of the present invention is to provide a polymeric hybrid membrane comprising chitosan (CS) and hydroxy ethyl cellulose (HEC) with optimum amount of montmorillonite (MMT) filler.

Yet another objective of the present invention is to provide a process for the preparation of hybrid membranes by solution casting technique with varying membrane thickness.

### SUMMARY OF THE INVENTION

The present invention deals with the natural polymers and its hybrids comprising Chitosan (CS) - Hydroxy ethyl cellulose (HEC) - Montmorillonite (MMT) crosslinked in acidic medium. The invention therefore provides water to be sorbed through the voids of the membrane small enough to make the membrane impermeable to air. The water diffusion in and across the membrane is facilitated by the hydrophilic-hydrophilic interaction and sorption-diffusion characteristics of the hybrid membranes; the air to be humidified in turn takes up the water.

Accordingly, the present invention provides a humidifying setup comprising the polymeric membrane sandwiched between two injection-molded graphite plates designed for humidification where water and air is passed on one side to obtain humidified air output. Polymeric hybrid membrane reported in this invention exhibited excellent humidified air output at varying temperatures between 30°C to 70°C.

### BRIEF DESCRIPTION OF THE FIGURE

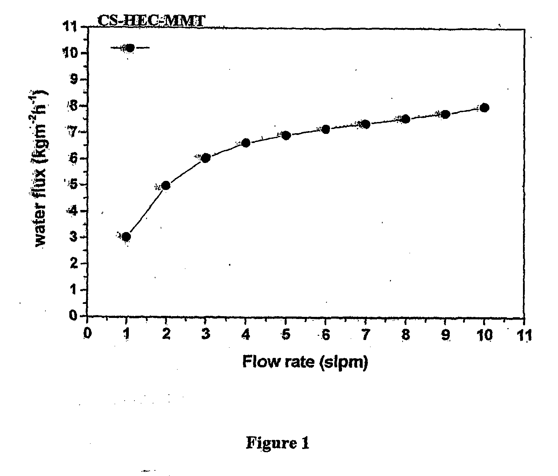

For a better understanding of the present invention, and to show more clearly how it may be carried out into effect, reference will now be made by the accompanying Figure, which shows a preferred embodiment of the present invention. FIG. 1 shows the variation of water flux with respect to air flow rate for CS-HEC-MMT hybrid membrane at 70°C. The area of the flow field is 25 sq. cm.

### DETAILED DESCRIPTION OF THE INVENTION

The present invention provides a novel approach to realize cost-effective self-supported polymeric membranes for air humidification process. The membrane comprises natural polymers and inorganic fillers, which have high water uptake properties besides being gas impermeable.

In the aforesaid description, the term humidification-unit will be understood as the one consisting of a self-supported membrane formed from natural polymers to realize the humidified air output. The membrane comprises CS-HEC-MMT, typically in the form of hybrid to induce the desired hydrophilic interaction. The membrane performance can be compared with those of commercially available membranes such as Nafion^{®} membranes from DuPont and others for ultra filtration and reverse osmosis. In the present invention, a portion of the membrane facing each plate in the humidification setup is water permeable, and gas impermeable in order to allow humidity exchange between liquid and gas streams flowing through the humidification area. Preferably, the water permeable membrane is impermeable to the reactant gases, specifically air in the present case. These self-supported membranes are suitable and convenient for water permeable humidification to achieve desired humidified-air output.

The natural polymer hybrid is a chitosan and hydroxy ethyl cellulose blend, and the inorganic filler is montmorillonite,

Natural polymer hybrid was prepared as follows. Known quantities of CS and HEC were dissolved separately in 10 wt. % aqueous acetic acid to form clear solution and were mixed under stirring at several proportions. Subsequently, known amount of MMT in 10 wt. % aqueous acetic acid was ultra-sonicated for about 5 h followed by addition to CS: HEC solution to form a polymeric hybrid. The solution was further stirred for 24 h. The casting of the admixture, thus obtained, as a membrane of thickness 150 µm was conducted on a smooth flat Plexiglas plate at ambient temperature (∼30°C). The hybrid membrane thus produced was finally cross-linked with dilute N₂SO₄ in aqueous acetone mixture.

While the above description constitutes the preferred embodiments, it is noteworthy that the present invention is susceptible to modifications and changes without departing from the fair meaning of the proper scope of the accompanying claims. As will be appreciated by those skilled in the art, the requirement for humidification is very dependent on the membrane used, temperature and pressure of operation.

The present humidification system employs a polymer hybrid membrane sandwiched between two injection molded graphite plates wherein plates have gas flow channels which are grooved. The gas flow channels have parallel serpentine gas flow channels. To reduce the direct pressure on the membrane materials, a smooth cloth was employed on either side of the flow-field plates. The system was gas tight. Air was passed on one side of the system at the flow rates ranging between 1 and 10 standard liters per minute (slpm). De-ionized water was fed from the reservoir at 20 ml per minute. The humidified air output at different airflow rate was recorded through a humidification sensor attached to the system. From the humidified air out put the precise mixing ratio and water flux were measured.

In the present invention, a portion of the CS-HEC-MMT hybrid membrane, facing either side of injection molded plates in the humidification set-up, is water permeable facilitating water exchange between liquid and air streams. Relative humidity values for CS-HEC-MMT membranes vary between 90-30 % with varying air flow rates from 1-10 slpm. The amount of water transporting across the membrane and mixing with the air is related to the membrane active area at a temperature between 30°C and 70°C that determines the water flux.

Present invention also describes the adsorption-diffusion-desorption principles due to the selective adsorption of water onto MMT clay particles. Accordingly, water flux increases with increase in driving force for water permeation concomitant to a faster desorption rate on either side of the CS-HEC-MMT hybrid membrane. This effect is more favorable for water transport since water molecules occupy most of the free channels in the hydrophilic clay region of the CS-HEC-MMT hybrid membrane.

CS-HEC has dual hydrophilic-hydrophilic interaction but the incorporation of MMT fillers in this membrane makes the stability of its structure more prolific rendering high water absorption capacity with high water flux at different temperatures. Water molecules are absorbed through the voids of the membrane making it water permeable while keeping it gas impermeable which helps in providing an optimum mixing ratio for air output of desired humidity. Maximum water flux of 7.5 kg/m²h is observed for CS-HEC-MMT membrane at the air flow rate of 10 slpm during repeated experimental cycles. Equilibrium sorption data shows water uptake capacity of 53% for CS-HEC-MMT hybrid membrane. Besides, this membrane is quite cost-effective and hence can be widely used for humidification purposes.

### EXAMPLES

*The following examples are given by way of illustration and therefore should not be construed to limit the scope of the present invention.* Examples 1 and 4 are according to present invention. Examples 2 and 3 are comparative and do not fall within the scope of claim 1.

### Example 1

### Formulation of CS-HEC-MMT hybrid membrane comprising 67.3 wt. % CS, 23.5 wt. % HEC and 9.2 wt. % MMT.

2.0 gm of chitosan (CS) was dissolved in 70 ml of 10 wt. % aqueous acetic acid solution under mechanical stirring at 30°C. 0.7 gm of hydroxy ethyl cellulose (HEC) was separately dissolved in 20 ml of 10 wt. % aqueous acetic acid solution under stirring at 30°C. Both CS and HEC were stirred until a clear and homogeneous solution was formed indicating a good mutual miscibility of the two polymers. Both CS and HEC solutions were mixed together under stirring conditions to form a compatible blend. 0.27 gm of montmorillonite (MMT) was dispersed in 10 ml of 10 wt. % aqueous acetic acid solution which was sonicated for 5 h and then added to the CS-HEC blend under stirring for 24 h to form a uniform dispersion of MMT particles in CS-HEC blend. The required solution of CS-HEC-MMT was poured on a smooth flat Plexiglas plate and air-dried at 30°C to form a membrane. The composite membrane thus formed comprises 67.3 wt. % CS, 23.5 wt. % HEC and 9.2 wt. % MMT and was cross-linked with 1 M H₂SO₄ in aqueous acetone feed mixture (30 ml water + 70 ml acetone) to avoid the solubility of CS-HEC matrix in water.

### Example 2

### Formulation of CS-HEC-MMT hybrid membrane comprising 73.3 wt. % CS, 25.7 wt. % HEC and 1 wt. % MMT.

2.0 gm of chitosan (CS) was dissolved in 70 ml of 10 wt. % aqueous acetic acid solution under mechanical stirring at 30°C. 0.7 gm of hydroxy ethyl cellulose (HEC) was separately dissolved in 20 ml of 10 wt. % aqueous acetic acid solution under stirring at 30°C. Both CS and HEC were stirred until a clear and homogeneous solution was formed indicating a good mutual miscibility of the two polymers. Both CS and HEC solutions were mixed together under stirring conditions to form a compatible blend. 0.027 gm of montmorillonite (MMT) was dispersed in 10 ml of 10 wt. % aqueous acetic acid solution which was sonicated for 5 h and then added to the CS-HEC blend under stirring for 24 h to form a uniform dispersion of MMT particles in CS-HEC blend. The required solution of CS-HEC-MMT was poured on a smooth flat Plexiglas plate and air-dried at 30°C to form a membrane. The composite membrane thus formed comprises 73.3 wt. % CS, 25.7 wt. % HEC and 1 wt. % MMT and was cross-linked with 1 M H₂SO₄ in aqueous acetone feed mixture (30 ml water + 70 ml acetone) to avoid the solubility of CS-HEC matrix in water.

### Example 3

### Formulation of CS-HEC-MMT hybrid membrane with 82.6 wt. % CS, 8.3 wt. % HEC and 9.1 wt. % MMT.

2.0 gm of chitosan (CS) was dissolved in 70 ml of 10 wt. % aqueous acetic acid solution under mechanical stirring at 30°C. 0.2 gm of hydroxy ethyl cellulose (HEC) was separately dissolved in 20 ml of 10 wt. % aqueous acetic acid solution under stirring at 30°C. Both CS and HEC were stirred until a clear and homogeneous solution was formed indicating a good mutual miscibility of the two polymers. Both CS and HEC solutions were mixed together under stirring conditions to form a compatible blend. 0.22 gm of montmorillonite (MMT) was dispersed in 10 ml of 10 wt. % aqueous acetic acid solution which was sonicated for 5 h and then added to the CS-HEC blend under stirring for 24 h to form a uniform dispersion of MMT particles in CS-HEC blend. The required solution of CS-HEC-MMT was poured on a smooth flat Plexiglas plate and air-dried at 30°C to form a membrane. The composite membrane thus formed comprises 82.6 wt. % CS, 8.3 wt. % HEC and 9.1 wt. % MMT and was cross-linked with 1 M H₂SO₄ in aqueous acetone feed mixture (30 ml water + 70 ml acetone) to avoid the solubility of CS-HEC matrix in water.

### Example 4

### Formulation of CS-HEC-MMT hybrid membrane with 90 wt. %CS, 9 wt. % HEC and 1 wt. % MMT.

2 gm of chitosan (CS) was dissolved in 70 ml of 10 wt. % aqueous acetic acid solution under mechanical stirring at 30°C. 0.2 gm of hydroxy ethyl cellulose (HEC) was separately dissolved in 30 ml of 10 wt. % aqueous acetic acid solution under stirring at 30°C. Both CS and HEC were stirred until a clear and homogeneous solution was formed indicating a good mutual miscibility of the two polymers. Both CS and HEC solutions were mixed together in stirring condition to form a compatible blend. 0.022 gm of montmorillonite (MMT) was dispersed in 10 ml of 10 wt. % aqueous acetic acid solution which was sonicated for 5 h and then added to the CS-HEC blend under stirring for 24 h to form a uniform dispersion of MMT particles in CS-HEC blend. The required solution of CS-HEC-MMT was poured on a smooth flat Plexiglas plate and air-dried at 30°C to form a membrane. The composite membrane thus formed comprises 90 wt. % CS, 9 wt. % HEC and 1 wt. % MMT and was cross-linked with 1 M H₂SO₄ in aqueous acetone feed mixture (30 ml water + 70 ml acetone) to avoid the solubility of CS-HEC matrix in water.

### Example 5

### Water flux in air humidification at 30°C

A portion of the CS-HEC-MMT hybrid membrane comprising CS, HEC and MMT in 67.3:23.5:9.2 wt. % respectively, facing either side of injection molded plates in the humidification set-up, is water permeable facilitating water exchange between liquid and air streams. The amount of water transporting across the membrane and mixing with the air is related to the membrane active area at a temperature 30°C that determines the water flux between 1-10 slpm. The water flux range between 0.8 kg/m².h and 1.5 kg/m².h at 30°C.

### Example 6

### Water flux in air humidification at 70°C

A portion of the CS-HEC-MMT hybrid membrane comprising CS, HEC and MMT in 67.3:23.5:9.2 wt. % respectively, facing either side of injection molded plates in the humidification set-up, is water permeable facilitating water exchange between liquid and air streams. The amount of water transporting across the membrane and mixing with the air is related to the membrane active area at a temperature 70°C that determines the water flux between 1-10 slpm. The water flux range between 3 kg/m².h and 7.8 kg/m².h at 70°C.

Advantages of the present invention:
- The present membranes when used for air humidification is suitable for combining the dew point cooling and the reheating sections allowing rapid changes in operating conditions, with typical response times less than a minute.
- In the membranes of the present invention, the degree of swelling is high as compared to the prior art membranes which are of utmost importance to impart high permeation flux for desired humidification output.
- Controlled cross-linking of these membranes permits water absorption, desired hydrophilic-hydrophobic domain and dual hydrophilic-hydrophilic interaction due to high absorption capacity of the inorganic filler.
- The system can be dynamically controlled to provide precise and accurate inlet fuel process gas-stream temperatures and relative humidity values essential for the efficient operation of a polymer electrolyte fuel cell over a wide range of load current densities.

## Claims

1. A polymeric hybrid membrane comprising:
[a] 65 wt. % to 90 wt. % of chitosan
[b] 25 wt. % to 9 wt. % of hydroxy ethyl cellulose
[c] 10 wt. % to 1 wt. % of montmorillonite.

2. The polymeric hybrid membrane as claimed in claim 1, wherein Chitosan and/or hydroxy ethyl cellulose are preferably treated with aqueous acetic acid.

3. A humidification system employing the polymeric hybrid membrane as claimed in any of the claims 1 to 2 wherein, said membrane is sandwiched between two injection molded graphite plates, wherein air is passed on one side of the system along with water to obtain humidified air output at varying temperatures.

4. The humidification system as claimed in claim 3, wherein said membrane is covered with a smooth cloth support.

5. The humidification system as claimed in claim 3, wherein the injection molded graphite plates have gas flow channels

6. The humidification system as claimed in any of the claims 3 to 5, wherein the injection-molded plates have parallel serpentine gas flow channels.

7. The humidification system as claimed in claim 3, wherein the temperature is varied between 30°C to 70°C.

8. The humidification system as claimed in claim 3, wherein the air flow rates are varied between 1 to 10 standard liter per minute (slpm).

## Patentansprüche

1. Polymere Hybridmembran, umfassend:
[a] 65 Gew.-% bis 90 Gew.-% Chitosan
[b] 25 Gew.-% bis 9 Gew.-% Hydroxyethylcellulose
[c] 10 Gew.-% bis 1 Gew.-% Montmorillonit.

2. Polymere Hybridmembran nach Anspruch 1, wobei Chitosan und/oder Hydroxyethylcellulose vorzugsweise mit wässriger Essigsäure behandelt sind.

3. Befeuchtungssystem, das die polymere Hybridmembran nach einem der Ansprüche 1 bis 2 verwendet, wobei die Membran zwischen zwei spritzgegossenen Graphitplatten angeordnet ist, wobei Luft auf einer Seite des Systems zusammen mit Wasser geleitet wird, um befeuchtete Luft zu erhalten, die bei variierenden Temperaturen ausgegeben wird.

4. Befeuchtungssystem nach Anspruch 3, wobei die Membran mit einem weichen Tuchträger abgedeckt ist.

5. Befeuchtungssystem nach Anspruch 3, wobei die spritzgegossenen Graphitplatten Gasströmungskanäle aufweisen.

6. Befeuchtungssystem nach einem der Ansprüche 3 bis 5, wobei die spritzgegossenen Platten parallele schlangenförmige Gasströmungskanäle aufweisen.

7. Befeuchtungssystem nach Anspruch 3, wobei die Temperatur zwischen 30 °C bis 70 °C variiert wird.

8. Befeuchtungssystem nach Anspruch 3, wobei die Luftströmungsraten zwischen 1 und 10 Standardlitern pro Minute (slpm) variiert werden.

## Revendications

1. Membrane hybride polymère comprenant :
[a] de 65 % en poids à 90 % en poids de chitosane
[b] de 25 % en poids à 9 % en poids d'hydroxyéthylcellulose
[c] de 10 % en poids à 1 % en poids de montmorillonite.

2. Membrane hybride polymère selon la revendication 1, le chitosane et/ou l'hydroxyéthylcellulose étant de préférence traités avec de l'acide acétique aqueux.

3. Système d'humidification employant la membrane hybride polymère selon l'une quelconque des revendications 1 à 2, ladite membrane étant entourée par deux plaques en graphite moulées par injection, l'air étant introduit sur un côté du système avec de l'eau pour obtenir un débit d'air humidifié à des températures variables.

4. Système d'humidification selon la revendication 3, ladite membrane étant recouverte d'un support en tissu doux.

5. Système d'humidification selon la revendication 3, les plaques en graphite moulées par injection ayant des canaux d'écoulement gazeux.

6. Système d'humidification selon l'une quelconque des revendications 3 à 5, les plaques en graphite moulées par injection ayant des canaux d'écoulement gazeux parallèles en serpentin.

7. Système d'humidification selon la revendication 3, la température étant modifiée entre 30 °C et 70 °C.

8. Système d'humidification selon la revendication 3, les débits d'air étant modifiés entre 1 et 10 litres standard par minute (slpm).
